(19) Europäisches Patentamt
European Patent Office
Office européen des brevets

(11) **EP 0 496 953 B1**

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.⁶: **G01F 1/66**

(21) Anmeldenummer: **91118115.4**

(22) Anmeldetag: **24.10.1991**

(54) **Durchflussvolumenzähler für flüssige Medien**

Volume through-put meter for fluids

Débitmètre volumique pour fluides

(84) Benannte Vertragsstaaten:
**AT BE CH DE DK FR GB IT LI LU NL SE**

(30) Priorität: **29.01.1991 CH 273/91**

(43) Veröffentlichungstag der Anmeldung:
**05.08.1992 Patentblatt 1992/32**

(73) Patentinhaber: **Landis & Gyr Technology Innovation AG**
**CH-6301 Zug (CH)**

(72) Erfinder: **Merkel, Jürgen**
**W-6450 Hanau 9 (DE)**

(74) Vertreter: **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach 101161**
**80085 München (DE)**

(56) Entgegenhaltungen:
EP-A- 0 162 987          EP-A- 0 249 691
CH-A- 604 133            DE-A- 3 230 397
DE-A- 3 734 635          FR-A- 2 077 968

## Beschreibung

Die Erfindung bezieht sich auf einen Durchflußvolumenzähler der im Oberbegriff des Anspruchs 1 genannten Art.

Solche Durchflußvolumenzähler werden vorteilhaft in Wärmemengenzählern verwendet.

Ein Durchflußvolumenzähler der im Oberbegriff des Anspruchs 1 genannten Art ist aus der DE-PS 37 34 635 bekannt. Bei einem solchen Durchflußvolumenzähler wird die Schallgeschwindigkeit im Medium nicht gemessen, sondern nur bei der Eichung des Gerätes berücksichtigt. Solche Durchflußvolumenzähler lassen sich deshalb nur für dasjenige Medium einsetzen, für das sie geeicht worden sind.

Der Erfindung liegt die Aufgabe zugrunde, die Schaltung eines Durchflußvolumenzählers der im Oberbegriff des Anspruchs 1 genannten Art so weiterzubilden, daß ohne größeren zusätzlichen Aufwand die Schallgeschwindigkeit gemessen und bei der Bildung des Meßresultats berücksichtigt wird, so daß der Durchflußvolumenzähler ohne Neueichung auch für verschiedene Medien einsetzbar ist.

Die genannte Aufgabe wird erfindungsgemäß durch die Merkmale des Anspruchs 1 gelöst. Eine vorteilhafte Ausgestaltung ergibt sich aus dem abhängigen Anspruch.

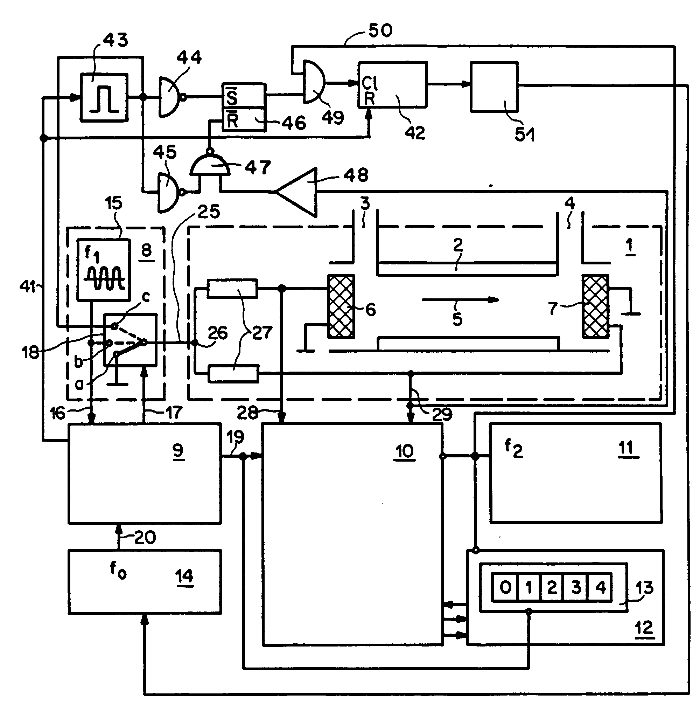

Nachfolgend wird ein Ausführungsbeispiel der Erfindung anhand der Zeichnung näher erläutert.

Die einzige Figur zeigt das Schaltschema eines Durchflußvolumenzählers.

Der in Figur dargestellte Durchflußvolumenzähler, wie er z. B. als Teil eines Wärmezählers gebraucht wird, besteht im wesentlichen aus einem Meßwertgeber 1 mit einem Meßrohr 2, in dem ein flüssiges Medium von einem Anschlußstutzen 3 zu einem Anschlußstutzen 4 in einer vorbestimmten, mit einem Pfeil 5 angegebenen Strömungsrichtung fließt, und aus Meßwandlern 6 und 7 für Ultraschall, einem Sendeglied 8, einem Steuerglied 9, einem Meßglied 10 zur Bestimmung einer Laufzeitdifferenz t der Ultraschallwellen, einem Abtastgenerator 11 mit der Frequenz $f_2$, einer Zählvorrichtung 12 mit einer Anzeigevorrichtung 13 und einem Impulsgeber 14 mit der Frequenz $f_o$.

Die Meßwandler 6, 7 stehen einander gegenüber und senden periodisch gleichzeitig Ultraschallwellenpakete aus, d. h. je ein Wellenpaket eilt in Richtung des Pfeiles 5 und ein Wellenpaket entgegengesetzt dazu. Die am Ende des Meßrohres 2 befindlichen Meßwandler 7 bzw. 6 empfangen daher ein durch die Strömung beschleunigtes bzw. verzögertes Ultraschallwellenpaket.

Das Sendeglied 8 enthält einen Oszillator 15 mit einer Frequenz $f_1$. Ein Taktsignal 16 des Oszillators 15 wird im vorzugsweise aus einer Zählkette bestehenden Steuerglied 9 benutzt, um ein Kommandosignal 17 für einen Umschalter 18 und ein Freigabesignal 19 für das Meßglied 10 und die Anzeigevorrichtung 13 zu erzeugen.

Der Umschalter 18 weist drei mögliche Stellungen a, b und c auf. Die Stellung a nimmt er während des Empfangens der Wellenpakete ein, die Stellung b während des Sendens der Wellenpakete zur Ultraschallmeßstrecke und die Stellung c während der Messung der Ultraschallgeschwindigkeit. Entsprechend ist auch das Kommandosignal 17 dreibegriffig, kann also drei logische Zustände einnehmen.

Ein vorzugsweiser schmaler Impuls 20 aus dem Impulsgeber 14 veranlaßt das Steuerglied 9, einen Meßzyklus zu beginnen. Der Meßzyklus besteht aus einer Sendephase, einer Empfangsphase, einer Eichphase zur Messung der Ultraschallgeschwindigkeit und einer Ruhephase. Der nachfolgende Impuls 20 beendet die Ruhephase und ein neuer Meßzyklus beginnt. Einzelheiten der Funktionsweise während der Sende- und Empfangsphase sind der DE-PS 37 34 635 zu entnehmen. Dabei ist auch ein Sendesignal 25 beschrieben, das über einen gemeinsamen Einspeisepunkt 26 und Ankopplungsglieder 27 auf die Meßwandler 6 und 7 gelangt. Auch sind dort Einzelheiten über ein UP-Empfangssignal 28 und ein DOWN-Empfangssignal 29 beschrieben.

Gegenüber der DE-PS 37 34 635 ist die Schaltung erweitert um eine Leitung für ein Startsignal 41, das vom Steuerglied 9 ausgeht und einerseits dem Reset-Eingang R eines Zählers 42 und andererseits einem Eingang eines Impulsgebers 43 zugeführt wird. Der Ausgang des Impulsgebers 43 ist einerseits mit dem Anschluß der Stellung c des Umschalters 18 und andererseits mit Eingängen eines ersten Inverters 44 und eines zweiten Inverters 45 verbunden. Der Ausgang des ersten Inverters 44 führt auf den Set-Eingang $S_{BAR}$ eines RS-Flipflops 46. Dabei bedeutet $S_{BAR}$ einen invertierenden Eingang. Der Ausgang des zweiten Inverters 45 ist mit einem Eingang eines NAND-Glieds 47 verbunden. Ein zweiter Eingang des NAND-Glieds 47 steht in Verbindung mit einem Ausgang eines SCHMITT-Triggers 48, der eingangsseitig mit der Leitung des DOWN-Empfangssignals 29 verbunden ist. Der Ausgang des NAND-Glieds 47 führt zum Reset-Eingang $R_{BAR}$ des RS-Flipflops 46, wobei $R_{BAR}$ wiederum bedeutet, daß der Eingang invertierend ist.

Der Ausgang des RS-Flipflops 46 führt auf einen ersten Eingang eines UND-Tors 49. An einem zweiten Eingang des UND-Tors 49 liegt eine Leitung 50 an, auf der eine Frequenz $f_2$ des Abtastgenerators 11 ansteht. Der Ausgang des UND-Tors 49 ist mit dem Clock-Eingang Cl des Zählers 42 verbunden. Schließlich ist der Ausgang des Zählers 42 über ein Quadrierglied 51 mit einem Eingang des Impulsgebers 14 verbunden.

Der in der DE-PS 37 34 635 beschriebenen Sende- und der Empfangsphase schließt sich erfindungsgemäß die Eichphase an. Das vom Steuerglied 9 erzeugte Startsignal 41 wirkt auf den Reset-Eingang R des Zählers 42 und setzt diesen zurück auf Null. Außerdem wirkt das Startsignal 41 auf den Impulsgeber 43 ein, der einen kurzen Meßimpuls, beispielsweise einen Impuls von 0,5 µs Dauer, erzeugt. Gleichzeitig wird der Umschalter 18 durch das Kommandosignal 17 in die Stellung c gebracht, so daß der im Impulsgeber 43 erzeugte Meßimpuls über den Einspeisepunkt 26 und die Ankopplungsglieder 27 auf die Meßwandler 6 und 7 gelangt und diese zu einer kurzen gedämpften Schwingung mit ihrer Eigenfrequenz von ca. 1 MHz anregt. Die Dauer des Meßimpulses ist vorzugsweise etwa gleich der halben Periodendauer dieser Eigenfrequenz.

Gleichzeitig wird mit der steigenden Flanke des Meßimpulses über den Inverter 44 das RS-Flipflop 46 gesetzt. Dadurch erhält das UND-Tor 49 auf seinem mit dem RS-Flipflop 46 verbundenen Eingang HIGH-Signal. Als Folge davon werden die Impulse der auf der Leitung 50 anstehenden Frequenz $f_2$ des Abtastgenerators 11 dem Clock-Eingang CI des Zählers 42 zugeführt.

Wenn der Impulsgeber 43 den Meßimpuls aussendet, so bewirkt das auch, daß der Meßwandler 7 einen Impuls aussendet. Dieser Impuls hat das Meßrohr 2 nicht durchlaufen und darf deshalb bei der Messung der Schallgeschwindigkeit $v_s$ nicht berücksichtigt werden. Er täuscht ein DOWN-Empfangssignal 29 vor und muß unterdrückt werden. Das geschieht auf einfache Weise mit Hilfe einer Verriegelung. Während dieser zu unterdrückende Impuls vom SCHMITT-Trigger 48 abgegeben wird, liegt am Set-Eingang $S_{BAR}$ des RS-Flipflops 46 Signal an. Gleichzeitig verhindert der Inverter 45 zusammen mit dem NAND-Glied 47, daß der Impuls das RS-Flipflop 46 zurücksetzen kann. Solange also am Set-Eingang $S_{BAR}$ des Flipflops 46 LOW-Signal anliegt, kann das RS-Flipflop 46 nicht zurückgesetzt werden. Folglich wird der ein DOWN-Empfangssignal 29 vortäuschende Impuls unterdrückt.

Beim Empfang des wirklichen DOWN-Empfangssignals 29 wird der SCHMITT-Trigger 48 beeinflußt. Der SCHMITT-Trigger 48 detektiert auf möglichst niedrigem Pegel den ersten vom Meßwandler 7 empfangenen Wellenzug. Trifft dieser ein, wechselt der Ausgang des SCHMITT-Triggers 48 auf HIGH, wodurch das RS-Flipflop 46 über das NAND-Glied 47 zurückgesetzt wird. Durch das Rücksetzen des RS-Flipflops 46 erhält dessen Ausgang LOW-Signal, was zur Folge hat, daß der eine Eingang des UND-Tors 49 ebenfalls LOW-Signal führt. Dadurch können die am anderen Eingang des UND-Tors 49 anliegenden Impulse der Frequenz $f_2$ des Abtastgenerators 11 nicht mehr auf den Clock-Eingang CI des Zählers 42 gelangen, so daß der Zählvorgang beendet wird. Nun enthält der Zähler 42 einen Zählerstand $N_T$. Dieser bleibt bis zum Zurücksetzen des Zählers 42 durch das nächste Startsignal 41 bei der später folgenden nächsten Eichphase erhalten.

Der Zähler 42 zählt also die Zahl der Impulse der Frequenz $f_2$, die zwischen dem Aussenden des Meßimpulses an den Meßwandlern 6 und 7 und dem Eintreffen des durch das Meßrohr 2 gelaufenen Meßimpulses am Meßwandler 7 liegen, also während der Laufzeit des Meßimpulses durch das Meßrohr 2. Diese Zahl der Impulse der Frequenz $f_2$ ergibt den Zählerstand $N_T$ und dieser ist somit der Schallgeschwindigkeit $v_s$ des Mediums umgekehrt proportional.

Dieser Zählerstand $N_T$ gelangt auf das Quadrierglied 51. Das Quadrierglied 51 kann beispielsweise aus einem Digital-Analog-Wandler, einem Operationsverstärker mit quadratischer Kennlinie und einem Analog-Digital-Wandler bestehen, der aus dem Analogwert wiederum eine Frequenz erzeugt.

Während beim Stand der Technik gemäß DE-PS 37 34 635, von dem die Erfindung ausgeht, der Impulsgeber 14 eine feste Frequenz $f_o$ abgibt, deren Größe bei der Justierung des Durchflußvolumenzählers eingestellt wird, ist beim erfindungsgemäßen Durchflußvolumenzähler die Frequenz $f_o$ abhängig vom Quadrat des Zählerstands $N_T$ vorteilhaft gemäß der Beziehung

$$f_o = f_{ojust} \cdot (N_T / N_{Tjust})^2,$$

wobei $f_{ojust}$ die sich bei der Justierung ergebende Frequenz $f_o$ ist, während $N_{Tjust}$ der bei der Justierung sich ergebende Zählerstand $N_T$ ist. Die Korrektur der Frequenz $f_o$ findet intern im Impulsgeber 14 statt.

Auf diese Weise wird die Frequenz $f_o$ immer in Bezug auf die wahre Schallgeschwindigkeit $v_s$ korrigiert, so daß weder eine separate Temperaturkompensation noch eine spezielle Eichung für ein bestimmtes Medium, das eine andere Schallgeschwindigkeit $v_s$ besitzt, nötig sind. Somit ist der Durchflußvolumenzähler universell für alle flüssigen Medien brauchbar.

Bei der vorstehend beschriebenen Ausführung wird der Meßimpuls zwar auf beide Meßwandler 6 und 7 geleitet, jedoch nur der am Meßwandler 7 ankommende Wellenzug weiterverarbeitet. Somit wird die Schallgeschwindigkeit nur in Strömungsrichtung gemessen, so daß tatsächlich die Summe von Schallgeschwindigkeit $v_s$ und Strömungsgeschwindigkeit gemessen wird. Da die Schallgeschwindigkeit $v_s$ um Größenordnungen größer ist als die Strömungsgeschwindigkeit, ist der auftretende Fehler jedoch minimal.

Eine Verbesserung der Genauigkeit kann dadurch erreicht werden, daß auch der vom Meßwandler 7 stammende und am Meßwandler 6 ankommende Wellenzug ausgewertet wird. Dazu kann in genau analoger Weise das UP-Empfangssignal 28 mittels eines Zählers ausgewertet werden. Dann wird die Schallgeschwindigkeit entgegen der Strömungsrichtung gemessen, also die Differenz von Schallgeschwindigkeit $v_s$ und Strömungsgeschwindigkeit.

Durch Mittelwertbildung der Meßresultate in und entgegen der Strömungsgeschwindigkeit, also Addition und Teilung durch 2, wird die Strömungsgeschwindigkeit eliminiert, so daß der wahre und genaue Wert der Schallgeschwindigkeit $v_s$ ermittelbar ist.

## Patentansprüche

1. Elektronischer Durchflußvolumenzähler für flüssige Medien mit einer Ultraschallmeßstrecke in einem Meßrohr (2) und zwei Meßwandlern (6; 7) für Ultraschall, die mit einem eine Sendefrequenz $f_1$ erzeugenden Oszillator (15) eines Sendeglieds (8) zur periodisch wiederholten gleichzeitigen Ansteuerung und mit einem Meßglied (10) verbunden sind, das die auf der Ultraschallmeßstrecke im Meßrohr (2) durch die Strömung des Mediums verursachte Laufzeitdifferenz eines Ultraschallsignals zwischen dem ersten Meßwandler (6) als Sender und dem zweiten Meßwandler (7) als Empfänger einerseits und der Laufzeit eines Ultraschallsignals zwischen dem zweiten Meßwandler (7) als Sender und dem ersten Meßwandler (6) als Empfänger andererseits mißt, einem eine Frequenz $f_o$ erzeugenden ersten Impulsgeber (14) zum wiederholten Auslösen eines Meßzyklus, einem Steuerglied (9), einem durch das Steuerglied (9) gesteuerten Umschalter (18), der während des Empfangs von Wellenpaketen eine erste Stellung (a) und während des Sendens von Wellenpaketen eine zweite Stellung (b) einnimmt, einem Abtastgenerator (11) und einer Zählvorrichtung (12) mit einer Anzeigevorrichtung (13) zur Umwandlung der durch die Laufzeitdifferenzen verursachten Phasenverschiebung der Schallwellen in Einheiten proportional zum volumen des pro Zeiteinheit durch das Meßrohr (2) fließenden Mediums und zum Aufsummieren und Anzeigen dieser Einheiten, **dadurch gekennzeichnet**, daß des Meßzyklus eine Eichphase zur Messung der Schallgeschwindigkeit umfaßt, daß ein zweiter Impulsgeber (43) vorhanden ist, der bei Ansteuerung durch das Steuerglied (9) einen Meßimpuls erzeugt, daß der Umschalter (18) in eine dritte Schalterstellung (c) zur Messung der Schallgeschwindigkeit steuerbar ist, in der der Meßimpuls auf wenigstens einen der Meßwandler (6, 7) schaltbar ist, daß ein Zähler (42) vorhanden ist, der durch die ansteigende Flanke des vom zweiten Impulsgeber (43) erzeugten Meßimpulses gestartet wird und der nach dem Start die Zahl der Wellenzüge einer vom Abtastgenerator (11) gesendeten Frequenz $f_2$ zählt und durch die ansteigende Flanke des nach dem Durchlaufen des Meßrohres (2) von einem der Meßwandler (6, 7) empfangenen Meßimpulses stoppt, daß ein Quadrierglied (51) vorhanden ist, an welches das Zählergebnis (NT) des Zählers (42) gelangt, und daß der erste Impulsgeber (14) die Frequenz $f_o$ in Abhängigkeit vom Quadrat des Zählergebnisses (NT) korrigiert.

2. Durchflußvolumenzähler nach Anspruch 1, **dadurch gekennzeichnet,** daß der erste Impulsgeber (14) die Frequenz $f_o$

gemäß der Beziehung

$$f_o = f_{ojust} \, (NT/NT_{just})^2$$

korrigiert, wobei

$f_{ojust}$ die sich bei der Eichung ergebende Frequenz $f_o$ und
$NT_{just}$ das bei der Eichung sich ergebende Zählergebnis NT sind.

3. Durchflußvolumenzähler nach Anspruch 1 oder 2, **dadurch gekennzeichnet**, daß die Dauer des Meßimpulses etwa der halben Periodendauer der Eigenfrequenz der Meßwandler (6, 7) entspricht.

4. Durchflußvolumenzähler nach Anspruch 3, **dadurch gekennzeichnet**, daß der zweite Impulsgeber (43) einen Meßimpuls von 0,5 µs Dauer erzeugt.

5. Durchflußvolumenzähler nach einem der vorhergehenden Ansprüche, **dadurch gekennzeichnet**, daß ein Zähler das vom Meßwandler (6) entgegen der Strömungsrichtung empfangene Empfangssignal (28) auswertet und ein Mittelwertbildner den Mittelwert der Meßergebnisse in Strömungsrichtung einerseits und entgegen derselben andererseits bildet.

## Claims

1. An electronic volume flow meter for fluid media comprising an ultrasound measuring section in a measuring pipe (2) and two measuring transducers (6; 7) for ultrasound, which are connected to an oscillator (15), producing a transmission frequency $f_1$ of a transmitting member (8) for periodically repeated simultaneous actuation and to a measuring member (10) which measures the transit time difference, caused in the ultrasound measuring section in the measuring pipe (2) by the flow of the medium, of an ultrasound signal between the first measuring transducer (6) as a transmitter and the second measuring transducer (7) as a receiver on the one hand and the transit time of an ultrasound signal between the second measuring transducer (7) as a transmitter and the first measuring transducer (6) as a receiver on the other hand, a first pulse generator (14) producing a frequency $f_o$ for repeatedly triggering off a measuring cycle, a control member (9), a change-over switch (18) which is controlled by the control member (9) and which assumes a first position (a) during the reception of wave packets and a second position (b) during the transmission of wave packets, a scanning generator (11) and a counting device (12) with a display device (13) for conversion of the phase displacement of the sound waves which is caused by the transit time differences into units proportionally to the volume of the medium flowing per unit of time through the measuring pipe (2) and for summing up and displaying said units, characterised in that the measuring cycle includes a calibration phase for measuring the speed of sound, that there is a second pulse generator (43) which upon actuation by the control member (9) produces a measuring pulse, that the change-over switch (18) is controllable into a third switch position (c) for measuring the speed of sound, in which position the measuring pulse is switchable to at least one of the measuring transducers (6, 7), that there is a counter (42) which is started by the rising edge of the measuring pulse produced by the second pulse generator (43) and which after the start counts the number of the wave trains at a frequency $f_2$ which is transmitted by the scanning generator (11) and which is stopped by the rising edge of the measuring pulse received by one of the measuring transducers (6, 7) after passing through the measuring pipe (2), that there is a squaring member (51) to which the counter result (NT) of the counter (42) passes, and that the first pulse generator (14) corrects the frequency $f_o$ in dependence on the square of the counter result (NT).

2. A volume flowmeter according to claim 1 characterised in that the first pulse generator (14) corrects the frequency $f_o$ in accordance with the relationship:

$$f_o = f_{ojust} \, (NT/NT_{just})^2$$

wherein $f_{ojust}$ is the frequency $f_o$ which occurs in the calibration operation and $NT_{just}$ is the counter result NT which occurs in the calibration operation.

3. A volume flowmeter according to claim 1 or claim 2 characterised in that the duration of the measuring pulse approximately corresponds to half the period duration of the natural frequency of the measuring transducers (6, 7).

4. A volume flowmeter according to claim 3 characterised in that the second pulse generator (43) produces a measuring pulse of a duration of 0.5 $\mu$s.

5. A volume flowmeter according to one of the preceding claims characterised in that a counter evaluates the reception signal (28) received by the measuring transducer (6) in opposite relationship to the flow direction and an average value-forming means forms the average of the measurement results in the flow direction on the one hand and in the opposite direction thereto on the other hand.

**Revendications**

1. Débitmètre volumique de type électronique pour milieux liquides, comprenant un trajet de mesure ultrasonore dans un tube de mesure (2) et deux transducteurs (6; 7) pour ultrasons, qui sont reliés à un oscillateur (15) générant une fréquence d'émission $f_1$ d'un élément d'émission (8) en vue de la commande simultanée, répétée périodiquement, des transducteurs, lesquels sont reliés en outre à un élément de mesure (10) qui mesure la différence, provoquée par l'écoulement du milieu sur le trajet de mesure ultrasonore dans le tube de mesure (2), entre le temps de propagation d'un signal ultrasonore entre le premier transducteur (6) en tant qu'émetteur et le second transducteur (7) en tant que récepteur d'une part et le temps de propagation d'un signal ultrasonore entre le second transducteur (7) en tant qu'émetteur et le premier transducteur (6) en tant que récepteur d'autre part, le débitmètre comprenant en plus un premier générateur d'impulsions (14), générant une fréquence $f_0$, pour le déclenchement répété d'un cycle de mesure, un élément de commande (9), un commutateur (18) commandé par l'élément de commande (9) et occupant une première position (a) pendant la réception de paquets d'ondes et une deuxième position (b) pendant l'émission de paquets d'ondes, un générateur d'échantillonnage (11) et un dispositif de comptage (12) avec un afficheur (13) pour convertir le déphasage des ondes sonores, provoqué par les différences de temps de propagation, en unités proportionnelles au volume du milieu s'écoulant par unité de temps à travers le tube de mesure (2) et pour totaliser et afficher ces unités, caractérisé en ce que le cycle de mesure comprend une phase d'étalonnage pour mesurer la vitesse du son, en ce qu'un second générateur d'impulsions (43) est prévu pour générer une impulsion de mesure lorsqu'il est commandé par l'élément de commande (9), que le commutateur (18) peut être amené à une troisième position (c) destinée à la mesure de la vitesse du son et dans laquelle l'impulsion de mesure est applicable à au moins l'un des transducteurs (6, 7), qu'un compteur (42) est prévu, qui est démarré par le flanc montant de l'impulsion de mesure générée par le second générateur d'impulsions (43) et qui, après son démarrage, compte le nombre de trains d'ondes d'une fréquence $f_2$ émise par le générateur d'échantillonnage (11), le compteur étant arrêté par le flanc montant de l'impulsion de mesure reçue par l'un des transducteurs (6, 7) après que cette impulsion a parcouru le tube de mesure (2), qu'un élément de quadration (51) est prévu, auquel est appliqué le résultat de comptage (NT) du compteur (42), et que le premier générateur d'impulsions (14) corrige la fréquence $f_0$ en fonction du carré du résultat du comptage (NT).

2.  Débitmètre volumique selon la revendication 1, caractérisé en ce que le premier générateur d'impulsions (14) corrige la fréquence $f_0$ selon la relation

$$f_0 = f_{0aj} \, (NT/NT \, aj)^2$$

dans laquelle $f_{0aj}$ est la fréquence $f_0$ obtenue lors de l'étalonnage et $NT_{aj}$ est le résultat de comptage NT obtenu lors de l'étalonnage.

3.  Débitmètre volumique selon la revendication 1 ou 2, caractérisé en ce que la durée de l'impulsion de mesure correspond à peu près à la moitié de la période de la fréquence propre des transducteurs (6, 7).

4.  Débitmètre volumique selon la revendication 3, caractérisé en ce que le second générateur d'impulsions (43) génère une impulsion de mesure d'une durée de 0,5 µs.

5.  Débitmètre volumique selon l'une des revendications précédentes, caractérisé en ce qu'un compteur exploite le signal de réception (28) reçu par le transducteurs (6) en sens contraire à la direction d'écoulement et un formateur de valeur moyenne forme la moyenne des résultats de mesure dans la direction d'écoulement d'une part et en sens contraire à cette direction d'autre part.